Europäisches Patentamt

European Patent Office

Office européen des brevets

(11) Veröffentlichungsnummer: **0 429 427 A1**

## (12) EUROPÄISCHE PATENTANMELDUNG

(21) Anmeldenummer: **90890302.4**

(22) Anmeldetag: **16.11.90**

(51) Int. Cl.$^5$: **B01D 53/34, C10K 1/20, B01J 20/04**

(30) Priorität: **24.11.89 AT 2699/89**

(43) Veröffentlichungstag der Anmeldung: **29.05.91 Patentblatt 91/22**

(84) Benannte Vertragsstaaten: **DE DK ES NL**

(71) Anmelder: **VOEST-ALPINE INDUSTRIEANLAGENBAU GESELLSCHAFT m.b.H. Turmstrasse 44 A-4020 Linz (AT)**

(72) Erfinder: **Die Erfinder haben auf ihre Nennung verzichtet**

(74) Vertreter: **Haffner, Thomas M., Dr. et al Patentanwaltskanzlei Dipl.-Ing. Adolf Kretschmer Dr. Thomas M. Haffner Schottengasse 3a A-1014 Wien (AT)**

(54) Verfahren zum Stabilisieren von festen Reinigungsmitteln für schadstoffhaltige Gase.

(57) Bei einem Verfahren zum Stabilisieren von festen Reinigungsmitteln für schadstoffhaltige Gase, wie z.B. Rauchgase oder Produktgase (3) einer Kohlevergasung oder eines Einschmelzvergasungsreaktors, wobei die festen Reinigungsmittel CaO enthalten, wird das stückige Reinigungsmittel nach der Beladung mit Schadstoffen (6) einer mit $CO_2$ angereicherten Atmosphäre zur zumindest oberflächlichen Umwandlung des CaO zu $CaCO_3$ in einer Karbonatisierungsstufe (10) ausgesetzt, wodurch aus den mit Schadstoffen beladenen, festen Reinigungsmitteln in einfacher Weise ein unmittelbar deponierbares Produkt (13) gebildet wird.

FIG. 1

EP 0 429 427 A1

# VERFAHREN ZUM STABILISIEREN VON FESTEN REINIGUNGSMITTELN FÜR SCHADSTOFFHALTIGE GASE

Die Erfindung bezieht sich auf ein Verfahren zum Stabilisieren von festen Reinigungsmitteln für schadstoffhaltige Gase, wie z.B. Rauchgase oder Produktgase einer Kohlevergasung oder eines Einschmelzvergasungsreaktors, wobei die festen Reinigungsmittel CaO enthalten.

Verfahren der eingangs genannten Art werden in Feststoffreaktoren sowohl bei der Kohlevergasung in Kohledruckvergasungskraftwerken, in Einschmelzvergasungsverfahren sowie bei der Rauchgasentschwefelung eingesetzt. Neben der Naßentschwefelung und der Abtrennung von Schadstoffen durch Hindurchleiten des Gasstromes durch flüssige Vorlagen ist für die Trockenentschwefelung in erster Linie die Verwendung eines Feststoffreaktors gebräuchlich, in welchem Erdalkalioxide als aktive, schwefelabbindende Mittel eingesetzt werden. Der Schacht eines derartigen Reaktors kann beispielsweise mit karbonatischem Material beschickt werden, wenn die Länge des Schachtes hinreichend lang ist, um während des Durchströmens des mit Schadstoffen beladenen Gasstromes sowohl die Entsäuerung als auch die Abbindung der Schadstoffe sicherzustellen, und ein Gasstrom mit hinreichender Temperatur zur Verfügung steht, um ein Entsäuern des karbonatischen Materials zu gewährleisten. Im Falle der Rauchgasentschwefelung muß insbesondere dann, wenn die Abgastemperatur geringer ist, die Entsäuerung bereits zuvor vorgenommen werden, um eine hinreichend rasche Abbindung von Schwefel an Erdalkalioxiden sicherzustellen. Insbesondere bei halogenhaltigen Abgasen gelingt es gleichfalls, diese an Erdalkalioxiden unter Umwandlung in die entsprechenden Halogenide bzw. Chloride teilweise abzubinden. Bei der Verwendung derartiger Entschwefelungsverfahren bzw. Schadstoffbeseitigungsverfahren ist insbesondere im Kraftwerksbetrieb die Anwendung von trockenen Verfahren wesentlich einfacher, da aufwendige Weiterverarbeitungen, wie sie bei der Naßgasreinigung erforderlich sind, entfallen. Bei der Trockenentschwefelung wird üblicherweise in einem einem Reduktionsschacht ähnlichen Reaktor mit Stückkalk die Entschwefelung vorgenommen und insbesondere bei Einschmelzvergasungsprozessen, bei welchen das Produktgas gereinigt wird, ist es bekannt, das mit Schadstoffen beladene Produkt unmittelbar in den Vergaserkopf zu chargieren und mit der Kohleschlacke zu verschlacken. Hohe Anteile von Kalziumsulfid in derartigen Schlacken beeinträchtigen jedoch die Stabilität der Schlacke und sind mit einer Reihe von Nachteilen bei einem Schlackengranulationsprozeß verbunden, bei welchem neuerlich Schwefelwasserstoff freigesetzt werden könnte.

Bedingt durch die Notwendigkeit, eine maximale Schadstoffkonzentration im Produktgas einzuhalten, kann die Beladung eines Feststoff- oder aber auch Wirbelschichtentschwefelungsreaktors nicht bis zu seiner theoretischen Grenze getrieben werden, so daß das feste Reinigungsmittel bereits zu einem Zeitpunkt ausgeschleust werden muß, wenn es noch hohe Anteile an oxidischem, nicht mit Schadstoffen reagiertem Material enthält. Wenn mit Rücksicht auf eine hohe Schwefelmenge die Verschlackung mit der Kohleschlacke nicht gewünscht wird, stellt ein derartiges Produkt ein nicht einfach zu verhaldendes Produkt dar, da Kalziumoxide unter stark basischer Reaktion mit Luftfeuchtigkeit zur Bildung von Kalkhydrat bzw. Kalkmilch führen und daher nur unter besonderen Sicherheitsvorkehrungen verhaldet werden dürfen. Außerdem geht dann auch CaS in Lösung und entzieht dem wässerigen Milieu Sauerstoff, um zu $CaSO_3$ bzw. $CaSO_4$ zu oxidieren.

Die Erfindung zielt nun darauf ab, ein Verfahren der eingangs genannten Art dahingehend weiterzubilden, daß aus den mit Schadstoffen beladenen, festen Reinigungsmitteln in einfacher Weise ein unmittelbar deponierbares Produkt gebildet wird. Zur Lösung dieser Aufgabe besteht die Erfindung im wesentlichen darin, daß das stückige Reinigungsmittel nach der Beladung mit Schadstoffen einer mit $CO_2$ angereicherten Atmosphäre zur zumindest oberflächlichen Umwandlung des CaO zu $CaCO_3$ ausgesetzt wird. Dadurch, daß die beladenen Reinigungsmittel in einer mit $CO_2$ angereicherten Atmosphäre umgesetzt werden, kommt es zumindest oberflächlich zur Umwandlung von Kalziumoxid zu Kalziumkarbonat und es wird dadurch die Wasserlöslichkeit bzw. die Gefahr von Auswaschungen von wasserlöslichen Salzen aus dem festen Reinigungsmittel wesentlich herabgesetzt. Insgesamt ergibt sich auf diese Weise ein einfach verhaldbares Produkt, bei welchem, in einer Verfahrensvariante, gleichzeitig Teilgasströme des Verfahrens so eingesetzt werden können, daß nach dem Karbonatisieren des beladenen, festen Reinigungsmittels Gase mit nach Abtrennung von $CO_2$ wiederum erhöhtem Heizwert rückgewonnen werden.

Wenn die Effizienz der Karbonatisierung bei hohen Mengen an festen Reinigungsmitteln gesteigert werden soll, kann es in vielen Fällen genügen, eine im wesentlichen wasserunlösliche Schale an den stückigen oder stückig gemachten, festen, beladenen Reinigungsmitteln auszubilden. Im Falle von Flugstrom- bzw. Wirbelschichtentschwefelungsverfahren wird entsprechend zerkleinertes bzw. gemahlenes Ausgangsmaterial eingesetzt und zur Ausbildung einer passivierenden Schale ist es in diesem Falle ausreichend, wenn, wie es einer bevorzugten Weiterbildung entspricht, so vorgegangen wird, daß feinkörniges, beladenes Reinigungsmittel vor der zumindest teilweisen Umwandlung der Oxide in Karbonate kompaktiert bzw. brikettiert wird.

Die Ausbildung einer derartig passivierenden Schale bzw. einer schützenden Karbonathülle, läßt sich mit geringem Aufwand dadurch sicherstellen, daß die zumindest teilweise Umwandlung in Karbonate bei Temperaturen von unter 450°C, vorzugsweise 150 bis 350°C, vorgenommen wird. Die Einhaltung einer derartigen Temperaturobergrenze stellt sicher, daß die Umwandlung von Karbonaten in Oxide weitgehend zurückgedrängt wird und es wird im $CO_2$-haltigen Gasstrom sichergestellt, daß das Gleichgewicht im Gasstrom auf der Seite von $CO_2$ ohne nennenswerte Ausbildung von CO liegt. Aus einem derartigen mit $CO_2$ angereicherten Gasstrom wird insbesondere dann, wenn es sich um das Produkt einer Teilverbrennung gehandelt hat, $CO_2$ abgetrennt und ein Gas mit verbessertem Heizwert gewonnen. Um die zumindest oberflächliche Umwandlung der festen, beladenen Partikel zu begünstigen, kann mit Vorteil so vorgegangen werden, daß dem grobstückigen, beladenen Reinigungsmittel feinkörniges bzw. staubförmiges Erdalkalioxid zugeführt bzw. an dieses angelagert wird, bevor dieses der Reaktion mit $CO_2$ angereicherten Atmosphäre ausgesetzt wird, wobei in einfacher Weise bevorzugt so vorgegangen wird, daß als feinkörniges Erdalkalioxid Feingut aus einer Entsäuerungsstufe für das karbonatische Material eingesetzt wird.

Für die Karbonatisierung des stückigen Reinigungsmittels kann gemäß einer bevorzugten Variante so vorgegangen werden, daß als mit $CO_2$ angereicherter Gasstrom der Produktgasstrom eingesetzt wird, der zuvor zur Entsäuerung des karbonatischen Reinigungsmittels vor dessen Beladung mit Schadstoffen eingesetzt wurde, so daß ein Teil des Produktgasstromes in einem einfachen Kreislauf geführt wird, in welchem die in der Entsäuerungsstufe erfolgende $CO_2$-Aufnahme des Gases zum Entsäuern bei der Umwandlung des karbonatischen $CaCO_3$ enthaltenden Reinigungsmittels in ein CaO enthaltendes Reinigungsmittel unmittelbar anschließend für eine Stabilisierung des mit Schadstoffen beladenen Reinigungsmittels herangezogen werden kann.

Entsprechend der Verfahrensführung des gesamten Kohlevergasungsverfahrens kann bevorzugt auch so vorgegangen werden, daß als mit $CO_2$ angereicherter Gasstrom ein Rauchgasstrom, vorzugsweise aus der Verbrennung von Produktgas, verwendet wird, und die von diesem aufgenommene fühlbare Wärme aus dem Reinigungsmittel dem Vergasungsprozeß wieder zugeführt wird, wobei für eine wirkungsvolle Verwertung der fühlbaren Wärme des zur Karbonatisierung eingesetzten Gasstromes gemäß einer bevorzugten Verfahrensführung so vorgegangen wird, daß der Rauchgasstrom nach Verlassen der Karbonatisierungsstufe in der Kohlevortrocknung vor der Vergasung eingesetzt wird.

Bei einer Reinigung von Rauchgasen bzw. Produktgasen wird durch die Verwendung von CaO enthaltenden Reinigungsmitteln in erster Linie eine Entschwefelung bei relativ hohen Temperaturen zwischen etwa 700°C und 1000°C vorgenommen, während eine Entfernung von Halogenwasserstoffen, insbesondere Chlorwasserstoff, lediglich teilweise erfolgt und im allgemeinen in Wäschern vorgenommen wird, die eine oftmals nicht zu vertretende Abwasserfracht mit sich bringen. Im Rahmen des erfindungsgemäßen Verfahrens ist es jedoch möglich, auch durch Aufnahme von Chlorwasserstoff verunreinigte Reinigungsmittel in einfacher Weise in ein stabilisiertes und problemlos deponierbares Produkt umzuwandeln, wobei vorzugsweise so vorgegangen wird, daß das stückige, gegebenenfalls bereits teilweise mit Schadstoffen beladene Reinigungsmittel nach einer Beladung bei Temperaturen von unter 450°C, insbesondere zwischen 300°C und 400°C, mit Halogenwasserstoffen, insbesondere Chlorwasserstoff, der mit $CO_2$ angereicherten Atmosphäre ausgesetzt wird. Bei derartigen, gegenüber einer Einbindung von Schwefelwasserstoff relativ niedrigen Temperaturen erfolgt eine praktisch vollkommene Einbindung von Chlorwasserstoff, wobei nach einer derartigen Einbindung unmittelbar die Karbonatisierung vorgenommen werden kann, da hiefür günstige Temperaturen des beladenen Reinigungsmittels unmittelbar vorliegen.

Insgesamt wird durch das erfindungsgemäße Verfahren ein Produkt mit befriedigenden Deponieeigenschaften gewonnen, ohne daß hiebei die Schlackenqualität eines Vergasungsreaktors beeinträchtigt werden muß. Weiters wird im Falle der Rauchgasentschwefelung unmittelbar ein Produkt geschaffen, welches keine aufwendigen weiteren Verfahrensschritte vor der Lagerung in Deponien erfordert. Im Falle von feinkörnigen, festen Reinigungsmitteln wird nach der Kompaktierung ein stabiles Produkt erhalten und es kann mit derartigen stabilisierten Produkten auch die Entsorgung von Kalziumchloriden, wie sie im Falle von stark chlorhaltigen Rauchgasen oder Produktgasen gebildet werden können, erfolgen. Die Karbonatisierung führt hiebei zu einer deutlichen Erhöhung der Primärfestigkeit und der Beständigkeit gegen schwache Säuren, wie beispielsweise Huminsäuren od.dgl..

Die Erfindung wird nachfolgend an Hand von in der Zeichnung schematisch dargestellten Ausführungsbeispielen näher erläutert. In dieser zeigen: Fig.1 ein schematisch dargestelltes Flußdiagramm der erfindungsgemäßen Verfahrensführung; Fig.2 eine schematische Darstellung einer Anlage zur Durchführung des erfindungsgemäßen Verfahrens; Fig.3 eine abgewandelte Ausführungsform einer Anlage zur Durchführung des erfindungsgemäßen Verfahrens ; Fig.4 eine schematische Darstellung einer Anlage zur Durchführung des erfindungsgemäßen Verfahrens, wobei eine getrennte Einheit zur Beladung der Reinigungsmittel mit Halogenwasserstoffen vorgesehen ist ; und Fig.5 eine weitere abgewandelte Ausführungsform einer Anlage zur Durchführung des erfindungsgemäßen Verfahrens, bei welcher die Beladung des Reinigungsmittels vor der anschließenden Rekarbonatisierung auf unterschiedlichen Niveaus in einer gemeinsamen Einheit vorgenommen werden kann.

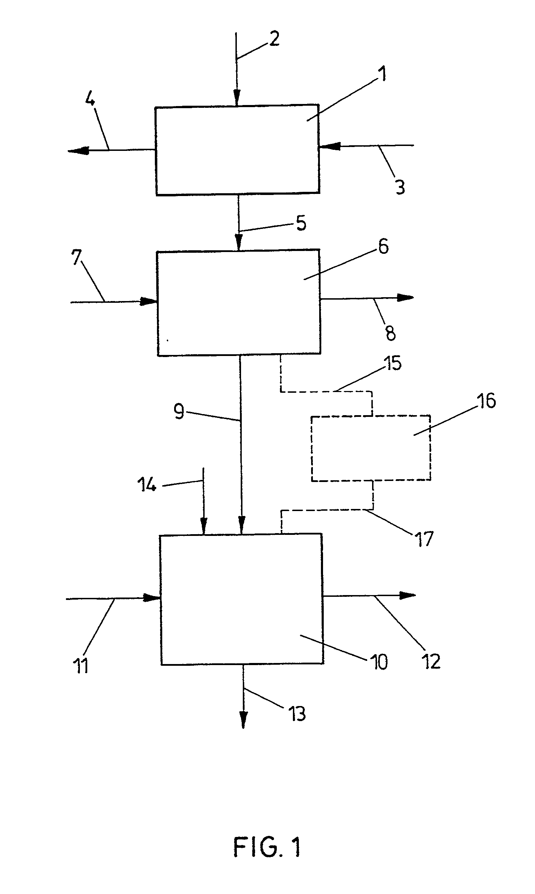

In Fig.1 ist mit 1 eine Kalzinier- bzw. Entsäuerungsstufe bezeichnet, welcher über eine Zuleitung 2 feste Reinigungsmittel, vor allem Kalziumkarbonat, zugeführt werden. In der Kalzinierstufe 1 erfolgt bei etwa 900°C eine Entsäuerung des Kalziumkarbonates durch Zufuhr eines geeigneten Gasgemisches 3 entsprechend der Reaktion $CaCO_3 \rightarrow CO_2 + CaO$. Bei 4 wird aus der Entsäuerungsstufe 1 ein mit dem $CO_2$ aus der Entsäuerungsstufe angereichertes Gasgemisch abgezogen. Die in der Entsäuerungsstufe 1 entsäuerten Reinigungsmittel, welche bei Einsatz von $CaCO_3$ im wesentlichen aus $CaO$ bestehen, werden über 5 einer Beladestufe zur Reinigung der über eine Zuleitung 7 zugeführten schadstoffhaltigen Gase, welche beispielsweise Rauchgase oder Produktgase einer Kohlevergasung oder eines Einschmelzvergasungsreaktors darstellen, zugeführt. In der Beladestufe 6 wird dabei vor allem eine Entschwefelung der zugeführten Rauchgase bzw. Produktgase einer Kohlevergasung vorgenommen, so daß nach der Entschwefelung bei 8 ein im wesentlichen von $H_2S$, und zum Teil auch von HCl befreites gereinigtes Produktgas abgezogen werden kann. In der Beladestufe 6 erfolgt dabei eine zumindest teilweise Umsetzung des $CaO$ in $CaS$ und bei Produktgasen einer Kohlevergasung oder eines Einschmelzvergasungsreaktors auch in geringem Maße in $CaCl_2$.

Die derart mit Schadstoffen beladenen Reinigungsmittel werden bei 9 abgezogen und können direkt einer Karbonatisierungsstufe 10 zugeführt werden, in welcher zumindest oberflächlich noch in den Reinigungsmittel vorhandenes $CaO$ in einer mit $CO_2$ angereicherten Atmosphäre, welche über eine Gaszufuhr 11 der Karbonatisierungsstufe zugeführt wird, wiederum in $CaCO_3$ umgewandelt wird. Bei 12 wird aus der Karbonatisierungsstufe 10 ein durch Verbrauch von $CO_2$ in der Karbonatisierungsstufe von $CO_2$ abgereichertes Gas abgezogen. Vorteilhafterweise wird dem beladenen Reinigungsmittel am Eintritt in die Karbonatisierungsstufe 10 feinkörniges Erdalkalioxid zugegeben, wie dies mit 14 dargestellt ist, an das beladene Korn angelagert und dieses anschließend dem Rekarbonatisierungsstrom 11 in 10 ausgesetzt.

Nach einer derartigen, zumindest oberflächlichen Karbonatisierung, welche bei Temperaturen von unter 450°C vorgenommen wird, wird bei 13 ein unmittelbar deponierfähiges, stabilisiertes Produkt abgezogen, in welchem $CaS$ und gegebenenfalls aus dem zu reinigenden Produktgas abgetrenntes $CaCl_2$ sicher durch die Karbonatisierung der Oberfläche eingeschlossen ist. Dabei kann für die Karbonatisierung unmittelbar das aus der Entsäuerungsstufe 1 bei 4 abgezogene und durch das Kalzinieren selbst $CO_2$-angereicherte Gas nach einer entsprechenden Kühlung bei 11 der Karbonatisierungsstufe 10 zugeführt werden.

Die Entschwefelung in der Entschwefelungsstufe 6 kann jedoch nicht nur in Feststoffreaktoren, sondern auch in Wirbelschicht- oder Flugstromentschwefelungsreaktoren vorgenommen werden, so daß es wünschenswert sein kann, das vor der Entschwefelungsstufe 6 gegebenenfalls zerkleinerte bzw. gemahlene Material nach der Entschwefelungsstufe 6 über 15 einer Brikettierpresse 16 zuzuführen, in welcher eine zumindest teilweise Kompaktierung vorgenommen wird, worauf das teilweise kompaktierte Material über 17 wiederum der Karbonatisierungsstufe 10 zugeführt wird.

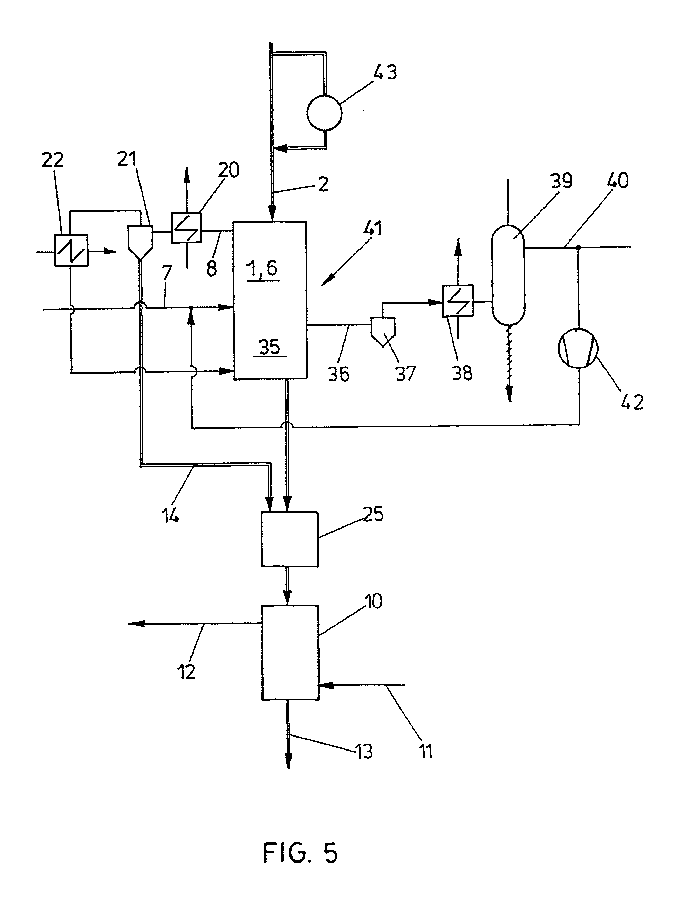

In Fig.1 sind die Kalzinierstufe 1 und die Entschwefelungs-bzw. Beladestufe 6 lediglich zur Verdeutlichung der ablaufenden unterschiedlichen Reaktionen getrennt dargestellt. Bei geeigneter Verfahrensführung können beide Prozesse beispielsweise in einem einzigen Schacht ablaufen, so daß durch die Zufuhr von zu reinigendem Produktgas über die Zuleitung 7 sowohl eine Entsäuerung entsprechend der Entsäuerungsstufe 1 als auch gleichzeitig eine Reinigung des zugeführten Produktgases entsprechend der Beladestufe 6 erfolgt, wie dies beispielsweise in Fig.5 dargestellt ist. Wesentlich ist in jedem Fall und unabhängig davon, ob die Entsäuerungsstufe 1 sowie die Entschwefelungsstufe 6 getrennt oder in einem einzigen Feststoffreaktor, welcher beispielsweise als Schacht ausgebildet sein kann, ablaufen, daß mit Schadstoffen angereichertes Reinigungsmittel nachfolgend einer zumindest oberflächlichen Karbonatisierung unterworfen wird, um ein unmittelbar deponierfähiges Produkt zu erhalten.

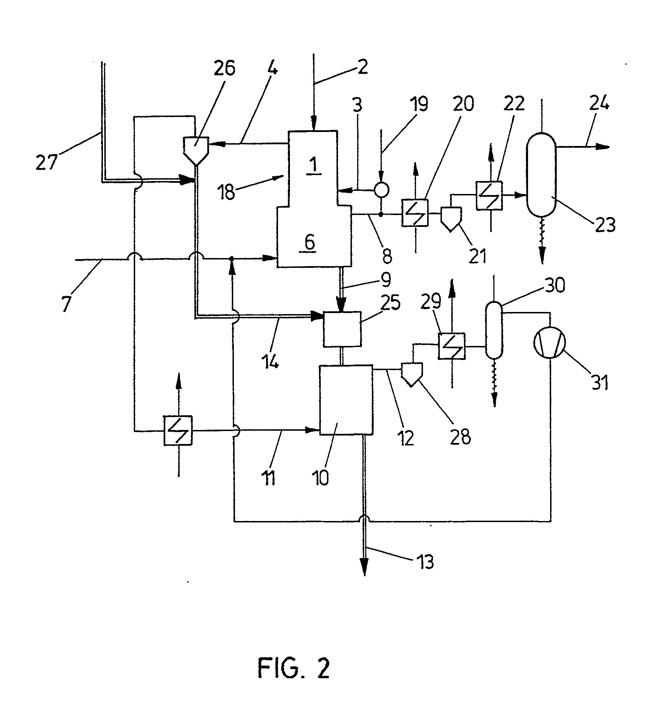

Bei der in Fig.2 dargestellten Anlage zur Durchführung des erfindungsgemäßen Verfahrens sind einzelne Anlagenteile mit den Bezugszeichen der Fig.1 versehen, sofern sie den im Flußdiagramm lediglich schematisch angedeuteten Einrichtungen entsprechen. Dabei ist mit 18 ein Reaktionsschacht bezeichnet, in dessen oberem Bereich die Kalzinier- bzw. Entsäuerungsstufe 1 vorgesehen ist und in dessen unterem Bereich die Beladestufe 6 vorgesehen ist, in welcher vor allem eine Entschwefelung des über 7 zugeführten, schadstoffhaltigen Gases erfolgt. Gereinigtes Gas wird wiederum bei 8 aus der Beladestufe 6 abgezogen, wobei in einen Teilstrom des abgezogenen Produktgases über 19 Luft oder Sauerstoff zugeführt wird und derart ein für die Entsäuerung geeignetes Gasgemisch mit Temperaturen von etwa 900°C erhalten wird, welches wiederum über die Zuleitung 3 der Kalzinierstufe 1, in welcher eine Umsetzung des über 2 zugeführten Erdalkalikarbonate in ein Oxid erfolgt, zugeführt wird. Der Hauptteil des aus der Reinigungs- bzw. Beladestufe 6 abgezogenen, gereinigten Produktgases wird in einem ersten Wärmetauscher 20 gekühlt und nach einer Abscheidung von Feinstpartikeln in einem Zyklon 21 und weiterer Abkühlung in einem weiteren Wärmetauscher 22 einem Quenchgaswäscher 23 zugeführt, in welchem eine Einbindung von Halogenwasserstoffen, insbesondere von Chlorwasserstoff, erfolgt. Aus dem Wäscher 23 wird über 24 gereinigtes Produktgas abgezogen.

Aus der Beladestufe 6 wird wiederum über 9 mit Schadstoffen angereichertes Material abgezogen und in einem Mischorgan, beispielsweise einer Pudertrommel 25, mit über 14 zugeführtem feinkörnigem CaO vermischt, welches an der Oberfläche der mit Schadstoffen beladenen Partikel angelagert wird. In weiterer Folge gelangt das mit Schadstoffen beladene Material in die Karbonatisierungsstufe 10, welcher als mit $CO_2$ angereichertem Gas über 11 das aus der Kalzinierstufe über 4 abgezogene und in der Kalzinierstufe 1 mit $CO_2$ angereicherte Gas nach Passieren eines Abscheiders 26 zugeführt wird. Im Abscheider 26 wird aus dem über 4 abgezogenen Gas mitgerissenes, feines Material, vor allem CaO, abgeschieden, wobei für eine ausreichende Vermischung im Mischorgan 25 dem aus dem Abscheider 26 abgezogenen Material weiter feines CaO über 27 zugesetzt wird.

Nach der zumindest oberflächlichen Umwandlung des mit Schadstoffen beladenen Materials und einer mit der Karbonatisierung verbundenen Stabilisierung wird aus der Karbonatisierungsstufe 10 wiederum ein von $CO_2$ abgereichertes Gas über 12 abgezogen und nach Passieren eines Abscheiders 28, eines Wärmetauschers 29 eines Kühlers bzw. Wäschers 30 in einem Verdichter 31 verdichtet und gemeinsam mit zu reinigendem Produktgas wiederum der Beladestufe bzw. Entschwefelungsstufe 6 zugeführt. Der Vorteil des Einsatzes von aus der Kalzinierstufe abgezogenem, mit $CO_2$ angereicherten Gas in der Karbonatisierungsstufe 10 liegt dabei in einem minimalen Energieaufwand.

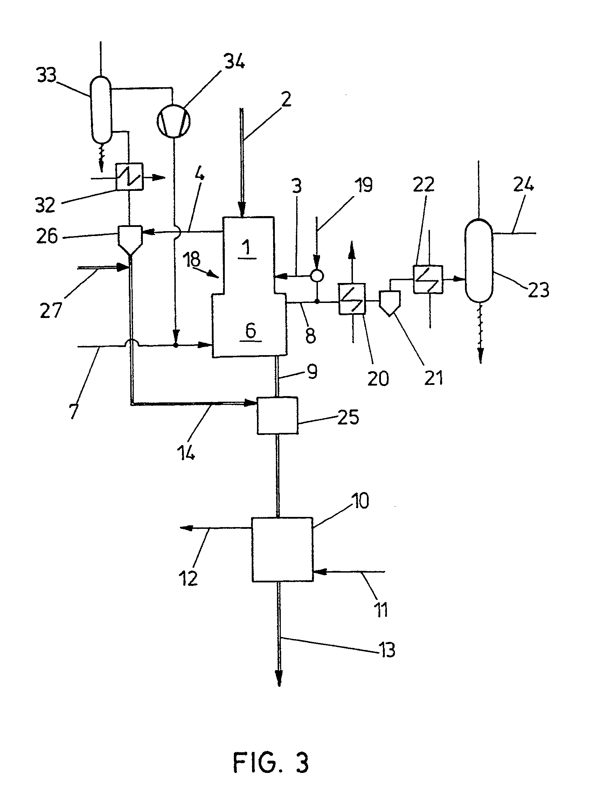

Bei der in Fig.3 dargestellten Ausführungsform sind für gleiche Bauteile die Bezugszeichen der Fig.1 und 2 beibehalten worden. Aus der Beladestufe 6 abgezogenes und mit Schadstoffen angereichertes Material wird wiederum in einem Mischorgan 25 mit über 14 zugeführtem, feinen CaO versetzt und anschließend der Karbonatisierungsstufe 10 zugeführt. Als $CO_2$-haltiges Gas findet bei dieser Ausführungsform Rauchgas eines nicht näher dargestellten Abhitzekessels Verwendung, welches wiederum über 11 zugeführt wird, wobei bei 12 ein wiederum von $CO_2$ abgereichertes Gas abgezogen wird, dessen fühlbare Wärme nach Verlassen der Karbonatisierungsstufe einer Kohletrocknung vor der Vergasung zugeführt wird, wobei dies der Übersichtlichkeit halber nicht dargestellt ist. Das aus der Beladestufe 6 bei 8 abgezogene Gas wird über Wärmetauscher geführt, in einem Abscheider 21 von Feststoffen befreit und in einem Quenchgaswäscher 23 weiter gereinigt. Das aus der Kalzinierstufe über 4 abgezogene Gas wird nach Passieren des Abscheiders 26 und eines Wärmetauschers 32 einem Quenchgaswäscher 33 zugeführt und in weiterer Folge nach einer Verdichtung in einem Verdichter 34 dem Rohgasstrom 7 vor der Zufuhr in die Beladestufe bzw. Entschwefelungsstufe 6 des Schachtes 18 zugesetzt. Durch Verwendung von Rauchgas eines Abhitzekessels als $CO_2$ angereichertes Gas kann die Karbonatisierung bei höherem $CO_2$-Gehalt im Gas vorgenommen werden und es ergibt sich weiters die Möglichkeit einer Abwärmenutzung der in der Karbonatisierungsstufe 10 durch den Gasstrom aufgenommenen fühlbaren Wärme in einer nachgeschalteten bzw. unmittelbar damit verbundenen Kohletrocknung. Weiters kann der Abrieb aus der Rekarbonatisierungsstufe 10 unmittelbar mit dem Gas 12 einer Feinkohle zugeführt werden.

In beiden, in den Fig.2 und 3 dargestellten Ausführungsformen wird angenommen, daß für eine Anlagerung von feinkörnigem bzw. staubförmigem Erdalkalioxid, insbesondere CaO, an der Oberfläche der relativ grobstückigen und mit Schadstoffen beladenen Partikel des Reinigungsmittels dieses zusätzlich zugesetzt werden muß, da im Abscheider bzw. Zyklon 26 zu wenig feinkörniges Material abgeschieden wird, welches darüberhinaus bei mittleren Gastemperaturen am Austritt der Beladestufe 1 zu wenig gebrannt ist. Höhere Temperaturen des Gasstromes 4 am Ausgang der Kalzinierstufe 1 sind dabei auf Grund der dafür nötigen höheren Gasmenge, des damit verbundenen geringeren $CO_2$-Gehaltes, des höheren Energieaufwandes für die nachgeschalteten Gebläse bzw. Verdichter 31 und 34 als auch für eine nach den Gebläsen erforderliche Teilung der Gasströme nicht wünschenswert.

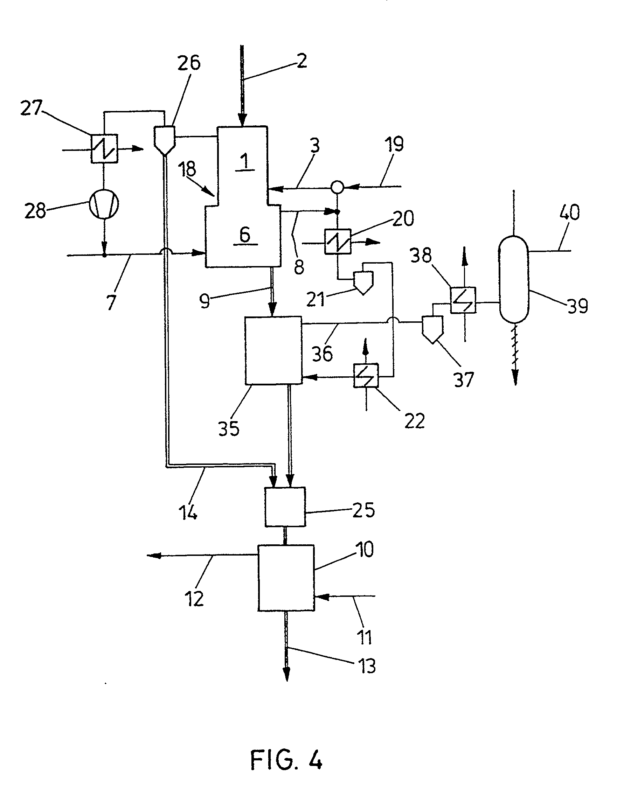

Bei der in Fig.4 dargestellten Ausführungsform findet wiederum ein Reaktionsschacht 18 Verwendung. Dabei wird das aus der Beladungs- bzw. Entschwefelungsstufe 6 bei 8 abgezogene und von Schwefelwasserstoff weitgehend gereinigte Produktgas wiederum teilweise nach Zusatz von Luft 19 über 3 der Kalzinierstufe 1 zugeführt, während der verbleibende Teilstrom über den Strahlungskühler 20 zur Erzeugung von Sattdampf, den Zyklon 21 und den Konvektionskühler 22 zur Erzeugung von Sattdampf einer Chloreinbindungsstufe 35 bei Temperaturen von unter 450°C, insbesondere etwa 350°C, zugeführt wird. In dieser Chloreinbindungsstufe 35 erfolgt bei derart relativ niedrigen Temperaturen eine weitgehende quantitative Einbindung des im Produktgas enthaltenen Chlorwasserstoffes. Aus der zusätzlichen Chloreinbindungsstufe 35 wird nunmehr auch von Chlorwasserstoff weitgehend gereinigtes Produktgas bei 36 abgezogen und nach Passieren eines Zyklons 37 und eines Konvektionskühlers 38, welcher beispielsweise als Gas-Gas–Wärmetauscher ausgebildet sein kann, einem Reingaswaschkühler 39 zugeführt, aus welchem gereinigtes Gas bei 40 abgezogen wird. Die Chloreinbindungsstufe 35 ersetzt dabei den Wäscher 23 zur Auswaschung des Chlorwasserstoffes.

Das aus der Chloreinbindungsstufe 35 abgezogene, stückige, oberflächlich hauptsächlich aus CaS und $CaCl_2$ bestehende Material wird anschließend in dem Mischbunker bzw. der Pudertrommel 25 mit feinkörnigem CaO, welches wiederum über die Zuleitung 14 zugeführt wird, vermischt und anschließend der Karbonatisierungsstufe 10 zugeführt, in welcher die zumindest oberflächliche Rekarbonatisierung des mit Schadstoffen beladenen Materials zur Ausbildung eines unmittelbar deponierfähigen Gutes erfolgt, welches bei 13 abgezogen wird. Der Karbonatisierungsstufe 10 wird dabei wiederum ein $CO_2$–hältiges Gas 11 zugeführt, welches entweder von aus der Entsäuerungsstufe 1 abgezogenem, mit $CO_2$ angereicherten Produktgas entsprechend Fig.2 oder von Rauchgas entsprechend Fig.3 gebildet wird. Aus der Entsäuerungsstufe 1 wird dabei das Gas über den Zyklon 26, den Wärmetauscher 27 und den Verdichter 28 abgezogen.

Bei der in Fig.5 dargestellten Ausführungsform findet anschließend an die Beladungs- bzw. Entschwefelungsstufe wiederum eine Chloreinbindungsstufe bei relativ niedrigen Temperaturen, d.h. unter 450°C, Verwendung, wobei bei dieser Ausführungsform ein gemeinsamer Schacht 41 für die Kalzinierung bzw. Entsäuerung 1, die Beladung bzw. Entschwefelung 6 als auch für die Chloreinbindung 35 Verwendung findet. Der im oberen Bereich des Reaktors 41 liegenden Beladungs- bzw. Entschwefelungsstufe 6 wird wiederum Rohgas 7 zugeführt, welches nach Reinigung bei 8 abgezogen wird und der Chloreinbindungsstufe 35 zugeführt wird. Das aus der Chloreinbindungsstufe 35 bei 36 abgezogene gereinigte Gas wird ähnlich wie bei der Ausführungsform gemäß Fig.4 gereinigt und gekühlt, worauf ein Teilstrom des bei 40 abgezogenen Gases in einem Verdichter 42 verdichtet und der Beladungsstufe rückgeführt wird. Das aus der Chloreinbindungsstufe abgezogene und mit Schwefelwasserstoff und Halogenwasserstoffen, insbesondere Chlorwasserstoff, verunreinigte Reinigungsmittel wird wiederum in der Pudertrommel 25 mit über 14 zugeführtem feinkörnigem Erdalkalioxid, insbesondere CaO versetzt, worauf das mit Schadstoffen beladene Reinigungsmittel der Karbonatisierungsstufe 10 zugeführt wird.

In der Zufuhr von Erdalkalikarbonat, insbesondere Kalziumkarbonat 2, zur Kalzinierstufe 1 ist bei der Ausbildung gemäß Fig.5 eine Mühle 43 angedeutet. Durch die Verwendung der Mühle 43 wird der Erdalkalikarbonat-Massenstrom derart gesteuert, daß ein Teil bereits in der Mühle 43 gemahlen wird und als Feingut in gebrannter Form aus dem kombinierten Entsäuerungs- und Entschwefelungsschacht 1 und 6 ausgetragen wird und nach Passieren des Strahlungskühlers 20 im Zyklon 21 abgeschieden wird und die Gesamtmenge an feinkörnigem bzw. staubförmigem CaO zur Anlagerung an den mit Schadstoffen beladenen Reinigungsmittel als Puderkalk 14 der Pudertrommel bzw. dem Mischbunker 25 zugeführt wird. Der Kopfbereich des Reaktors 42 wird dabei in der Entsäuerungs- und Entladestufe 1 bzw. 6 relativ heiß, d.h. bei Temperaturen von über 900°C betrieben, um die Bildung von $CaCl_2$ in diesem Bereich weitgehend zu unterbinden, welches auf Grund der hohen Temperaturen im Kopfbereich zu Clustern führen würde, so daß mit hoher Austrittstemperatur am Kopf des Reaktors 41 das über 2 eingebrachte Feingut praktisch auf dem Weg bis zum Zyklon 21 entsäuert wird.

Die in Fig.5 dargestellte Kombination einer einstufigen Entschwefelung, d.h. einer Kombination der Entsäuerungsstufe bzw. Kalzinierstufe 1 mit der Entschwefelungs- bzw. Beladestufe 6, in einem gemeinsamen Reaktor bzw. Schacht mit einer weitgehenden und quantitativen Einbindung von Chlorwasserstoff in den Reinigungsmitteln ist dabei bei großem Verhältnis von Schwefel zu Chlor in der Kohle, bei wenig Bedarf an freiem CaO zur Schlackenbildung und bei einem hohen CaS-Gehalt in der Schlacke realisierbar, wobei sich in allen Fällen die Erzeugung eines unmittelbar deponierfähigen stabilisierten Produktes nach der Karbonatisierungsstufe 10 als günstig erweist.

**Ansprüche**

1. Verfahren zum Stabilisieren von festen Reinigungsmitteln für schadstoffhaltige Gase (3), wie z.B. Rauchgase oder Produktgase einer Kohlevergasung oder eines Einschmelzvergasungsreaktors, wobei die festen Reinigungsmittel CaO enthalten, dadurch gekennzeichnet, daß das stückige Reinigungsmittel nach der Beladung (6) mit Schadstoffen einer mit $CO_2$ angereicherten Atmosphäre zur zumindest oberflächlichen Umwandlung (10) des CaO zu $CaCO_3$ ausgesetzt wird.

2. Verfahren nach Anspruch 1, dadurch gekennzeichnet, daß feinkörniges, beladenes Reinigungsmittel vor der zumindest teilweisen Umwandlung (10) der Oxide in Karbonate kompaktiert bzw. brikettiert wird.

3. Verfahren nach Anspruch 1 oder 2, dadurch gekennzeichnet, daß dem grobstückigen, beladenen Reinigungsmittel feinkörniges bzw. staubförmiges Erdalkalioxid (14) zugeführt bzw. an dieses angelagert wird, bevor dieses der Reaktion (10) der mit $CO_2$ angereicherten Atmosphäre ausgesetzt wird.

4. Verfahren nach Anspruch 3, dadurch gekennzeichnet, daß als feinkörniges Erdalkalioxid (14) Feingut aus einer Entsäuerungsstufe (1) für das karbonatische Material eingesetzt wird.

5. Verfahren nach einem der Ansprüche 1 bis 4, dadurch gekennzeichnet, daß die zumindest teilweise Umwandlung (10) in Karbonate bei Temperaturen von unter 450°C, vorzugsweise 150 bis 350°C, vorgenommen wird.

6. Verfahren nach einem der Ansprüche 1 bis 5, dadurch gekennzeichnet, daß als mit $CO_2$ angereicherter Gasstrom der Produktgasstrom (4) eingesetzt wird, der zuvor zur Entsäuerung (1) des karbonatischen Reinigungsmittels vor dessen Beladung (6) mit Schadstoffen eingesetzt wurde.

7. Verfahren nach einem der Ansprüche 1 bis 5, dadurch gekennzeichnet, daß als mit $CO_2$ angereicherter Gasstrom (11) ein Rauchgasstrom, vorzugsweise aus der Verbrennung von Produktgas, verwendet wird, und die von diesem aufgenommene fühlbare Wärme aus dem Reinigungsmittel dem Vergasungsprozeß wieder zugeführt wird.

8. Verfahren nach Anspruch 7, dadurch gekennzeichnet, daß der Rauchgasstrom nach Verlassen der Karbonatisierungsstufe (10) in der Kohlevortrocknung vor der Vergasung eingesetzt wird.

9. Verfahren nach einem der Ansprüche 1 bis 8, dadurch gekennzeichnet, daß das stückige, gegebenenfalls bereits teilweise mit Schadstoffen beladene Reinigungsmittel nach einer Beladung (6) bei Temperaturen von unter 450°C, insbesondere zwischen 300°C und 400°C, mit Halogenwasserstoffen, insbesondere Chlorwasserstoff, der mit $CO_2$ angereicherten Atmosphäre ausgesetzt wird.

FIG. 1

FIG. 2

FIG. 3

FIG. 4

FIG. 5

**Europäisches Patentamt**

## EUROPÄISCHER RECHERCHENBERICHT

Nummer der Anmeldung

EP 90 89 0302

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|-----------|-----------|-----------|-----------|
| X | US-A-3 966 431 (J.W. CRAIG)<br>* Ansprüche 1-5 *<br>--- | 1 | B 01 D 53/34<br>C 10 K 1/20<br>B 01 J 20/04 |
| P,X | DE-C-3 831 128 (METALLGESELLSCHAFT)<br>* Spalte 1, Zeilen 1-35 *<br>----- | 1 | |
| | | | **RECHERCHIERTE SACHGEBIETE (Int. Cl.5)**<br><br>B 01 D<br>C 10 K<br>B 01 J |

Der vorliegende Recherchenbericht wurde für alle Patentansprüche erstellt

| Recherchenort | Abschlußdatum der Recherche | Prüfer |
|-----------|-----------|-----------|
| DEN HAAG | 14-02-1991 | KANOLDT W.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)